# EUROPÄISCHE PATENTANMELDUNG

(11) **EP 1 389 700 A2**
(43) Veröffentlichungstag der Anmeldung: **18.02.2004**
(21) Anmeldenummer: 03008341.4
(22) Anmeldetag: 10.04.2003
(51) Int. Cl.: F16J 1/16

(54) **Lageranordnung und ein zu deren Herstellung bestimmtes Verfahren**

(30) Priorität: 14.08.2002 DE 10237923
(71) Anmelder: Volkswagen Aktiengesellschaft, 38436 Wolfsburg (DE)
(72) Erfinder: Heinemann, Rolf, Dipl.-Ing., 38165 Lehrte (DE)
(74) Vertreter: Scheffler, Jörg

(57) **Zusammenfassung**

Die Erfindung betrifft eine Lageranordnung (1), umfassend einen Kolbenbolzen (4) und einen durch den Kolbenbolzen (4) schwenkbeweglich mit einem Pleuel (2) verbundenen Hubkolben (3), mit einer die Reibung zwischen dem Hubkolben (3) und dem Kolbenbolzen (4) reduzierenden Kontaktfläche (7), und ein zu deren Herstellung bestimmtes Verfahren. Um eine ausreichende Versorgung der Kontaktfläche (7) mit Schmiermittel zu gewährleisten, hat der Kolbenbolzen (4) im Bereich einer Kontaktfläche (7) eine durch Ausnehmungen (9) an dem Kolbenbolzen (4) realisierte Strukturierung (8). Hierdurch wird das Abfließen des nicht dargestellten Schmiermittels verzögert, so dass eine optimale Schmierfilmdicke mit einfachen Mitteln sichergestellt werden kann. Einzelne Ausnehmungen (9) der Strukturierung (8) können zudem umlaufend, schräg oder einander kreuzend angeordnet sein, um so eine Förderwirkung des Schmiermittels und damit die Versorgung verdeckter Abschnitte des Kolbenbolzens (4) zu realisieren.

## Beschreibung

Die Erfindung betrifft eine Lageranordnung, umfassend einen Kolbenbolzen und einen durch den Kolbenbolzen schwenkbeweglich mit einem Pleuel verbundenen Hubkolben, mit einer die Reibung zwischen dem Hubkolben und dem Kolbenbolzen reduzierenden Kontaktfläche. Weiterhin betrifft die Erfindung ein Verfahren zur Herstellung.

Eine solche Lageranordnung ist beispielsweise durch die DE 197 04 224 A 1 bekannt. Diese betrifft die Verbindung zwischen einem Hubkolben und einem Pleuel, mit einem in Lagern gehaltenen Kolbenbolzen, an welchem zwischen den Lagern ein kolbenseitiges Pleuelende eingreift. Der Kolbenbolzen ist dabei unmittelbar in dem Hubkolben und dem Pleuelende gelagert. Die Kontaktfläche zwischen dem Hubkolben und dem Kolbenbolzen weist zur Verminderung der Reibungsverluste eine Beschichtung auf, die einen mit zunehmender Flächenpressung abfallenden Reibkoeffizienten hat.

Weiterhin ist es in der Praxis auch bekannt, bei Motoren hoher Leistung Laufbuchsen aus Buntmetall in die dabei beispielsweise aus Aluminium hergestellten Kolben einzusetzen, um so einem frühzeitigen Verschleiß entgegenzuwirken und eine ausreichende Ölversorgung des Kolbenbolzens sicherzustellen.

Als nachteilig erweist sich bei beiden Lageranordnungen der vergleichsweise hohe Aufwand für die zusätzlichen Arbeitsschritte bei der Herstellung, der einerseits für die Beschichtung und die hierzu erforderlichen, vorbereitenden Verfahrensschritte, andererseits beim Einsetzen der zusätzlichen, passgenauen Laufbuchse entsteht.

Bei einer Lageranordnung nach der EP 09 37 920 A1 ist der Kolbenbolzen als Hohlkörper ausgeführt. Ein zugeführter Schmierstoff gelangt so von dem Inneren des Kolbenbolzens durch Öffnungen auf die äußere Oberfläche, so dass auf diese Weise auch in von anderen Bauelementen abgedeckten Abschnitten eine zuverlässige Versorgung mit dem Schmierstoff sichergestellt werden kann. Die Öffnungen sind hierzu in nutenförmigen Ausnehmungen angeordnet. Hinderlich erweist sich bei dieser Lageranordnung die Ausgestaltung des Kolbenbolzens als Hohlkörper. Hierdurch wird eine Neukonstruktion des Kolbenbolzens sowie weiterer Bauelemente des Antriebs erforderlich, wodurch ein erheblicher Aufwand verursacht wird. Daher hat sich diese Anordnung in der Praxis bisher nicht durchsetzten können.

Weiterhin ist durch die DE 198 22 901 A 1 ein Verfahren zum haftenden Aufbringen einer Schmiermittelschicht auf eine freiliegende und tribologisch beanspruchte Oberfläche eines Kolbenbauteiles, vorzugsweise eines Kolbenbolzens und / oder eines Kolbenringes, bekannt, bei dem eine ein Trockenschmiermittel aufweisende Schmierstoffschicht durch teilweise Umwandlung von Bor und Sauerstoff zur Bildung von Borsäure als Trockenschmiermittel der Schmierstoffschicht unter Zuhilfenahme von Wasserstoff genutzt wird.

Die DE 393 23 28 A 1 offenbart darüber hinaus auch ein Verfahren zur Bearbeitung von durch Reibung hochbeanspruchten Flächen in Brennkraftmaschinen, insbesondere der Zylinderlauffläche von Kolbenmotoren, wobei die Fläche gehont und zusätzlich einer Laserstrahlbearbeitung mittels eines gepulsten Excimerlasers unterzogen wird.

In ähnlicher Weise wird auch nach der DE 42 17 530 A 1 bei einem Verfahren zum Bearbeiten von Kolbenlaufbahnen, insbesondere aus Gußeisen, zunächst die zu bearbeitende Fläche gehont und im Anschluss daran mittels eines Laserstrahles nachbearbeitet.

Vor diesem Hintergrund liegt der Erfindung die Aufgabe zugrunde, eine wesentlich vereinfachte Lageranordnung zu realisieren. Insbesondere soll dabei auf zusätzliche Bauelemente sowie auf Neukonstruktionen verzichtet werden. Weiterhin soll ein Verfahren zur Herstellung geschaffen werden.

Die erstgenannte Aufgabe wird gelöst mit einer Lageranordnung gemäß den Merkmalen des Patentanspruchs 1. Die Unteransprüche 2 bis 9 betreffen besonders zweckmäßige Weiterbildungen der Erfindung.

Erfindungsgemäß ist also bei der Lageranordnung eine das Abfließen eines Schmiermittels verzögernde Strukturierung im Bereich der Kontaktfläche vorgesehen. Hierdurch wird in der Strukturierung eine ausreichende Menge des Schmiermittels zuverlässig gehalten, so dass zusätzliche Maßnahmen zur Reduzierung des Reibungswiderstandes, so etwa Lagerbuchsen aus einem reibungsarmen Material oder spezielle Beschichtungen, verzichtbar sind. Die Strukturierung führt dabei zur Ausbildung von Öltaschen, die eine ausreichende Schmierfilmdicke ermöglichen. Weiterhin kann dabei auf einen hohlen Hubkolben verzichtet werden, so dass die in der Praxis aus einem Vollmaterial hergestellten Hubkolben mit der erfindungsgemäßen Strukturierung ohne weitergehende Änderungsmaßnahmen, insbesondere ohne Durchbrechungen oder Öffnungen, im wesentlichen unverändert eingesetzt werden können.

Eine besonders vorteilhafte Ausführungsform der vorliegenden Erfindung wird dadurch erreicht, dass die Strukturierung mittels einer eine erhöhte Rauhigkeit aufweisenden Oberflächenbeschaffenheit realisiert ist. Hierdurch kann die Strukturierung auch bei bereits vorhandenen Kolbenbolzen mit lediglich geringem Aufwand nachgerüstet werden. Hierzu wird die Oberfläche des Kolbenbolzens einer entsprechenden mechanischen oder auch chemischen Nachbearbeitung unterzogen. Die Herstellung kann dadurch wesentlich vereinfacht werden.

Die Strukturierung kann im Bereich der Kontaktfläche beliebig an dem Kolben und / oder dem Kolbenbolzen angeordnet sein, wobei jedoch nach einer besonders erfolgversprechenden Weiterbildung die Strukturierung zumindest abschnittsweise an dem Kolbenbolzen angeordnet ist. Hierdurch kann das Anbringen der Strukturierung auf die Außenfläche des Kolbenbolzens beschränkt werden, wodurch die Herstellungskosten reduziert werden können. Zudem kann der Kolbenbolzen zur Nachrüstung oder im Servicefall problemlos ausgetauscht werden.

Eine besonders zweckmäßige Abwandlung der vorliegenden Erfindung wird dadurch erreicht, dass die Strukturierung auf den Kolbenbolzen durch Aufbringen von zusätzlichem Material erreicht ist. Hierdurch können auch bereits vorhandene Kolbenbolzen mit der Strukturierung versehen werden, die dabei durch Auftragen oder Abscheiden von Material, welches sich hinsichtlich seiner Werkstoffeigenschaften von dem Kolbenbolzen unterscheiden kann, realisiert wird. Das Material kann daher speziell an die Eigenschaften des Schmiermittels und der Kontaktfläche angepasste Materialeigenschaften aufweisen, durch die so ein optimaler Schmiermittelfilm sichergestellt werden kann.

Eine andere, ebenfalls besonders praxisnahe Ausgestaltung der vorliegenden Erfindung wird dadurch erreicht, dass die Strukturierung durch Ausnehmungen an dem Kolbenbolzen erreicht ist. Hierdurch kann die Strukturierung ohne Änderung der äußeren Abmessungen durch Entfernen von Materialsubstanz des Kolbenbolzens realisiert werden. Die Strukturierung kann daher in der Kontaktfläche ohne Einfluss auf die Drehbeweglichkeit uneingeschränkt eingesetzt werden.

Weiterhin erweist es sich als besonders erfolgversprechend, wenn die Ausnehmungen als Schmiermitteltaschen ausgebildet sind. Hierdurch kann eine nach dem Stand der Technik bisher nicht erreichbare Schmiermittelmenge im Bereich der Ausnehmungen gespeichert werden, um so unter allen auftretenden Betriebsbedingungen eine ausreichende Schmiermittelversorgung sicherzustellen. Die Ausnehmungen können dabei insbesondere derart bemessen sein, dass sich ein Kapillareffekt einstellt, um so das Anhaften des Schmiermittels zu verbessern.

Weiterhin erweist es sich als besonders günstig, wenn einzelne Ausnehmungen der Strukturierung an dem Kolbenbolzen umlaufend, schräg oder einander kreuzend angeordnet sind. Hierdurch wird im motorischen Betrieb das Schmiermittel in die gewünschten Bereiche transportiert und stellt dort die ausreichende Schmierung sicher. Gleichzeitig verbleibt eine ausreichende Schmiermittelmenge in den einzelnen Bereichen. Zusätzlich können einzelne, miteinander nicht verbundene Vertiefungen als Schmiermittelreservoir eingesetzt werden.

Dabei erweist es sich als besonders günstig, wenn die Strukturierung derart angeordnet ist, dass im Betrieb eine relative Drehbewegung zu einem Fließen des Schmiermittels führt, um so einen gleichmäßigen Schmiermittelkreislauf zu erreichen, welcher alle Abschnitte der relativ zueinander beweglichen Bauelemente umfasst.

Als besonders praxisnah erweist es sich dabei auch, wenn die Strukturierung eine Höhendifferenz von 10 bis 500 µm aufweist und dadurch hinsichtlich der Belastbarkeit des Kolbenbolzens zu keinen Einschränkungen oder nachteiligen Einflüssen auf die Stabilität führt.

Die Strukturierung kann dabei ferner durch drucktechnische Verfahren aufgebracht oder durch schleifende oder spanende Bearbeitung erzeugt werden.

Die zweitgenannte Aufgabe wird erfindungsgemäß durch ein Verfahren zur Herstellung einer Strukturierung an einem zur schwenkbeweglichen Verbindung eines Pleuels und eines Hubkolbens bestimmten Kolbenbolzen geschaffen, wobei die Strukturierung durch Ablatieren mittels eines Laserstrahles oder eines Elektronenstrahles eingebracht wird. Hierdurch kann eine nahezu beliebige Formgebung der Strukturierung oder einzelner Wendeln sowie Spiralen am Kolbenumfang erreicht werden, die hierzu auf thermischem Wege, insbesondere durch Abtragen oder Umwandlung oberflächennaher Schichten, abgetragen wird. Die Wärmeeinflusszone ist dabei sehr gering, so dass eine unerwünschte Schädigung angrenzender Abschnitte des Kolbenbolzens ausgeschlossen ist. Zudem wird die Herstellung des Kolbenbolzens durch diesen Arbeitsschritt nur unwesentlich verzögert, wobei insbesondere keinerlei Vorarbeiten an der Oberfläche des Kolbenbolzens erforderlich sind.

Neben der Bearbeitung mittels Laserstrahlung oder anderer elektromagnetischer Strahlung sind in der Praxis auch vorteilhafte Verfahren bekannt, bei denen die Strukturierung durch Legieren, Dispergieren oder Schweißen eingebracht wird. Die Auswahl des jeweils geeigneten Verfahrens kann daher in optimale Weise an die jeweiligen Einsatzzwecke und Bedingungen angepasst werden.

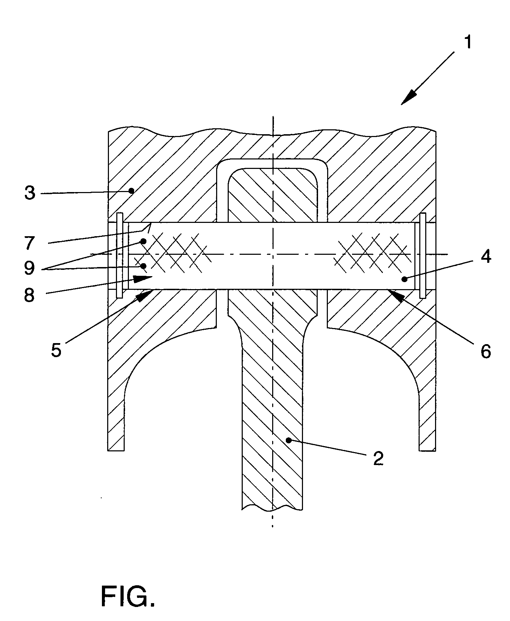

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in einer seitlichen Schnittdarstellung eine erfindungsgemäße Lageranordnung 1, die ein Pleuel 2 und einen Hubkolben 3, sowie einen deren schwenkbewegliche Verbindung ermöglichenden Kolbenbolzen 4 umfasst. Der Kolbenbolzen 4 ist an seinen beiden Endabschnitten jeweils in einer Lagerstelle 5, 6 gehalten. Um auch in diesem Bereich eine ausreichende Versorgung mit Schmiermitteln zu gewährleisten, hat der Kolbenbolzen 4 im Bereich einer Kontaktfläche 7 eine Strukturierung 8, welche durch Ausnehmungen 9 an dem Kolbenbolzen 4 realisiert ist. Hierdurch wird das Abfließen des nicht dargestellten Schmiermittels verzögert, so dass eine optimale Schmierfilmdicke mit einfachen Mitteln sichergestellt werden kann. Einzelne Ausnehmungen 9 der Strukturierung 8 können zudem umlaufend, schräg oder einander kreuzend angeordnet sein, um so eine Förderwirkung des Schmiermittels und damit die Versorgung eingeschlossener Abschnitte des Kolbenbolzens 4 zu realisieren.

### BEZUGSZEICHENLISTE

- 1: Lageranordnung
- 2: Pleuel
- 3: Hubkolben
- 4: Kolbenbolzen
- 5: Lagerstelle

- 6: Lagerstelle
- 7: Kontaktfläche
- 8: Strukturierung
- 9: Ausnehmungen

## Patentansprüche

1. Lageranordnung (1), umfassend einen Kolbenbolzen (4) und einen durch den Kolbenbolzen (4) schwenkbeweglich mit einem Pleuel (2) verbundenen Hubkolben (3), mit einer die Reibung zwischen dem Hubkolben (3) und dem Kolbenbolzen (4) reduzierenden Kontaktfläche (7), **gekennzeichnet durch** eine das Abfließen eines Schmiermittels verzögernde Strukturierung (8) im Bereich der Kontaktfläche (7).

2. Lageranordnung (1) nach Anspruch 1, **dadurch gekennzeichnet, dass** die Strukturierung (8) mittels einer eine erhöhte Rauhigkeit aufweisenden Oberflächenbeschaffenheit realisiert ist.

3. Lageranordnung (1) nach den Ansprüchen 1 oder 2, **dadurch gekennzeichnet, dass** die Strukturierung (8) zumindest abschnittsweise an dem Kolbenbolzen (4) angeordnet ist.

4. Lageranordnung (1) nach zumindest einem der vorangehenden Ansprüche, **dadurch gekennzeichnet, dass** die Strukturierung (8) auf den Kolbenbolzen (4) durch Aufbringen von zusätzlichem Material erreicht ist.

5. Lageranordnung (1) nach zumindest einem der Ansprüche 1 bis 3, **dadurch gekennzeichnet, dass** die Strukturierung (8) durch Ausnehmungen (9) an dem Kolbenbolzen (4) erreicht ist.

6. Lageranordnung (1) nach Anspruch 5, **dadurch gekennzeichnet, dass** die Ausnehmungen (9) als Schmiermitteltaschen ausgebildet sind.

7. Lageranordnung (1) nach zumindest einem der vorangehenden Ansprüche, **dadurch gekennzeichnet, dass** einzelne Strukturierungen (8) an dem Kolbenbolzen umlaufend, schräg oder einander kreuzend angeordnet sind.

8. Lageranordnung (1) nach zumindest einem der vorangehenden Ansprüche, **dadurch gekennzeichnet, dass** die Strukturierung (8) derart angeordnet ist, dass im Betrieb eine relative Drehbewegung zu einem Fließen des Schmiermittels führt.

9. Lageranordnung (1) nach zumindest einem der vorangehenden Ansprüche, **dadurch gekennzeichnet, dass** die Strukturierung (8) eine Höhendifferenz von 10 bis 500 µm aufweist.

10. Verfahren zur Herstellung einer Strukturierung an einem zur schwenkbeweglichen Verbindung eines Pleuels und eines Hubkolbens bestimmten Kolbenbolzen, **dadurch gekennzeichnet, dass** die Strukturierung durch Ablatieren mittels eines Laserstrahles oder eines Elektronenstrahles eingebracht wird.

11. Verfahren nach Anspruch 10, **dadurch gekennzeichnet, dass** die Strukturierung durch Legieren, Dispergieren oder Schweißen eingebracht wird.
